Europäisches Patentamt

European Patent Office

Office européen des brevets

(11) Publication number: 0 511 732 A2

# EUROPEAN PATENT APPLICATION

(21) Application number: 92302084.6

(22) Date of filing: 11.03.92

(51) Int. Cl.⁵: G06F 1/00

(30) Priority: 26.03.91 JP 62124/91
21.06.91 JP 150666/91
21.06.91 JP 150671/91

(43) Date of publication of application:
04.11.92 Bulletin 92/45

(84) Designated Contracting States:
DE FR GB IT NL

(71) Applicant: Nakano, Manabu
1-ban 28-109, Iwayanakamachi 2-chome,
Nadaku
Kobeshi, Hyogo(JP)
Applicant: Masatsuki, Hiroshi
1-ban 7-104, Higashinara 2-chome
Ibarakishi, Osaka(JP)

(72) Inventor: Nakano, Manabu
1-ban 28-109, Iwayanakamachi 2-chome,
Nadaku
Kobeshi, Hyogo(JP)
Inventor: Masatsuki, Hiroshi
1-ban 7-104, Higashinara 2-chome
Ibarakishi, Osaka(JP)

(74) Representative: Wombwell, Francis et al
Potts, Kerr & Co. 15, Hamilton Square
Birkenhead Merseyside L41 6BR(GB)

(54) Data communication method and a data terminal equipment used therein.

(57) A method of data communication comprises the step of inputting an identifying message through a data communication line from a calling computer to a called computer so as to identify the calling computer. The method further comprises the step of making an access through another data communication line from the called computer to the calling computer so as to identify again the calling computer. The calling and called computers are connected one to another only in a case wherein both the preceding steps identify the calling computer as one of allowed computers. In a case wherein a local user's computer is used, it has to call up the calling computer before the called computer is called.

FIG. 1

## BACKGROUND OF THE INVENTION

The present invention relates to a method of data communication which is carried out between computers through the data communication line such as subscriber's telephone line.

A user computer owned by a person or entity will be permitted to make a connection with a host computer in order to obtain an information service therefrom, provided that he approves himself one of the subscribers entitled to utilize the host computer.

Identifying messages such as secret identifier code ( hereinafter referred to as ID ) and pass words have been employed to discriminate the entitled users from the others not entitled. In general, operators of the user computers call up the host computer and subsequently input the pass words or the like from the user computers. If the pass word coincides with one of the registered identifying messages, then connection of user computer with the host computer is allowed for information service.

Such a conventional procedure simply relying on the coincidence of the identifying messages has however given rise to the following problems. For example, the secret ID or pass words are not safe from being unfairly procured by a third party or person due to theft or unintentional leakage. Even if the identifying messages were unfairly procured, connection with the host computer will be made insofar as they coincide with those identifying data which are stored in the host computer. Thus the information service may be utilized unfairly, or what is worse, the programs and/or data written in the host computer may be destroyed or falsified intentionally. It is afraid that those problems will become more serious as the data communication system comes into wide use. Therefore, it is an urgent matter to establish proper measures against such problems.

## SUMMARY OF THE INVENTION

Accordingly, an object of the present invention is to provide a data communication method effective to prevent the computers from being unfairly connected one to another, lest the information service should be received unfairly and further lest the programs and data of the host computer should be destroyed or falsified.

Another object is to provide a data terminal equipment adapted for installation on the data communication line such as subscriber's or access line so that the present data communication method can be performed properly according to the invention.

In order to achieve these objects, the step of making an access from a called computer to a calling computer is carried out, in addition to the conventional step of inputting the identifying message to the called computer from the calling computer, so that a synthetic decision can be made as to whether the calling computer is entitled to do so or not.

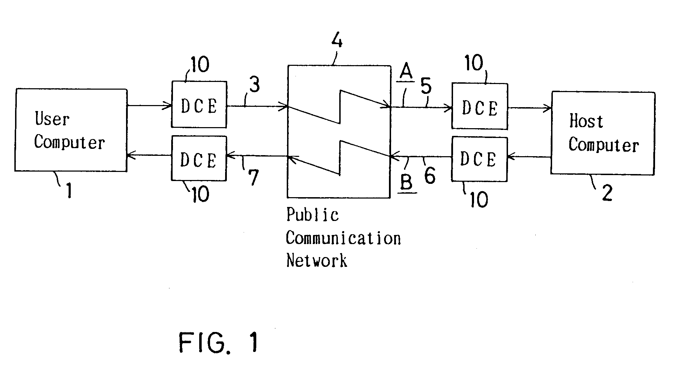

The characteristic feature of the data communication method of the present invention will be given at first in outline and using the reference numerals in Fig. 1. An identifying message will be input at a calling computer 1 through a data communication line "A" toward a called computer 2. This is the step carried out at first to check the qualification of the calling computer 1. Subsequently, an access will be made through another data communication line "B" in a reverse direction from the called computer 2 to the calling computer 1. This is the second step of checking the qualification of said calling computer 1. Only in a case wherein both the checking steps verify that the calling computer 1 is one of the allowed user computers, connection of the calling computer with the called host computer will be made.

The terms "calling computer" and "called computer" are used throughout this specification to respectively indicate "a computer outputting the identifying message such as pass words" and "a computer receiving the identifying message".

The invention further provides a method of data communication method in which a handy computer or the like is used to obtain an information service from a host computer 2, by means of any public communication line which will be available to a mobile and local user. In this case, a local user's computer 8 has to call up a calling computer 1 at first. Similarly to the already described method, an identifying message will thereafter be input at the calling computer 1 through a data communication line "A" toward a called computer 2. This is the step carried out at first to check the qualification of the calling computer 1. Subsequently, an access will be made also through another data communication line "B" from the called computer 2 to the calling computer 1. This is the second step of checking the qualification of said calling computer 1. Only in a case wherein both the checking steps verify that the calling computer 1 is one of the allowed computers, the local user's computer 8 will be connected to the called computer 2.

The present invention provides also a data terminal equipment which is suited to carry out the abovementioned method. This data terminal equipment (denoted by the abbreviation "DTE" in the drawings), which is disposed between a computer for data communication and public communication lines, comprises an input-output device 21 connected to the computer, a plurality of further input-output devices 22 connected to the respective public communication lines, a plurality of signal converting circuits 23 for converting into predetermined forms the data signals transmitted bidirectionally between the computer and the public communication lines, and a control circuit 24 which is actuated in response to a command signal from the computer so as to transmit the data signals between the computer and all or any of the public communication lines.

The invention further provides a data terminal equipment which is also disposed between a computer for data communication and public communication lines, and comprises an input-output device 21 connected to the computer, at least one further input-output device 22 connected to at least one public communication line, a signal converting circuit 23 for converting into predetermined forms the data signals transmitted bidirectionally between the computer and the public communication lines, at least one still further input-output device 25 connected to at least one data circuit-terminating equipment (denoted by the abbreviation "DCE" in the drawings) 30, and a control circuit 24 which is actuated in response to a command signal from the computer so as to transmit the data signals between the computer and the public communication lines, and/or between the computer and the data circuit-terminating devices.

The invention still further provides a data terminal equipment which is also disposed between a computer for data communication and public communication lines, and comprises an input-output device 21 connected to the computer, a plurality of further input-output devices 25 connected to respective data circuit-terminating equipments 30, and a control circuit 24 which is actuated in response to a command signal from the computer so as to transmit the data signals between the computer and the data circuit-terminating devices.

According to the method provided by the invention shown in Fig. 1, the calling computer 1 calls up the called computer 2 by means of the data communication line "A". The identifying message such as a pass word is then input at the calling computer 1 through said line "A" toward the called computer 2 for the purpose of identifying the calling computer 1. Next, the access is made by means of the other data communication line "B" from the called computer 2 to the calling computer 1 for the same purpose of checking the calling computer. The calling computer can be connected to the called computer only in a case wherein both the checking steps verify that the calling computer 1 is a subscriber's computer. In other words, those two computers are not connected one to another unless the access from the called computer 2 identifies the calling computer as the subscriber's computer, even if the identifying message were unfairly procured by a person and were used to mistake him for one of the subscribers.

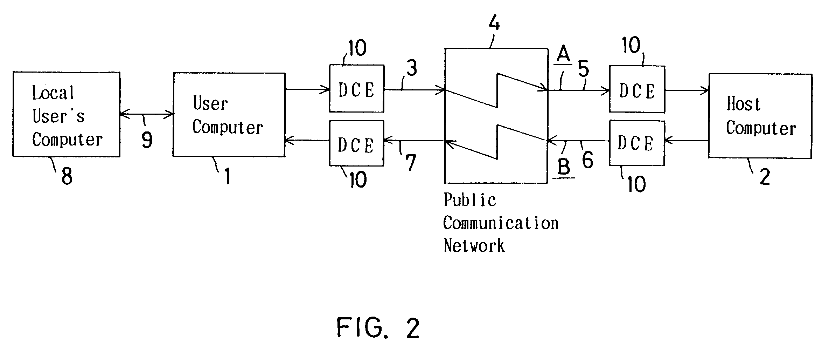

In a case wherein the local user's computer 8 is used as shown in Fig. 2, this computer 8 is connected at first by a public communication line 9 to the calling computer 1. Thereafter, the identifying message such as a pass word will be input at the calling computer 1 toward the called computer 2 which is linked with it through the data communication line "A". The thus sent identifying message is checked to identify the calling computer 1. The access, which will subsequently be made through the other data communication line "B" from the called computer 2 to the calling computer 1, will be used also to identify the calling computer 1. Only in a case wherein both the checking steps verify that the calling computer 1 is one of the allowed computers, it will be connected to the called computer 2, with the local user's computer 8 being thus connected also thereto.

In order to use the data terminal equipment 20 to perform the data communication method of the invention, the input-output device 21 is connected to the computer. On the other hand, the further input-output device 22 is connected to the public communication line, with the still further input-output device 25 being connected to the data circuit-terminating equipment. The control circuit 24 is actuated in this state in response to the command signal from the computer so as to make an electronic connection with or disconnection thereof from the public communication line or the data circuit-terminating equipment.

These and other objects, features and advantages will become apparent from the following description.

BRIEF DESCRIPTION OF THE DRAWINGS

Fig. 1 is a scheme showing the electronic connection of a calling computer with a called computer which are incorporated to perform the method as one mode of the present invention as defined in the claim 1;

Fig. 2 is a further scheme showing the electronic connection of a calling computer with a called computer which are incorporated to perform the method as another mode of the present invention as defined in the claim 2;

Fig. 3 is a block diagram showing a data terminal equipment which is provided in an embodiment of the invention as defined in the claim 5;

Fig. 4 a scheme showing a data communication system between computers, which system employs the data terminal equipment shown in Fig. 3;

Fig. 5 is a further block diagram showing a data terminal equipment which is provided in another embodiment of the invention as defined in the claim 6;

Fig. 6 a scheme showing a data communication system between computers, which system employs the data terminal equipment shown in Fig. 5;

Fig. 7 is a still further block diagram showing a data terminal equipment which is provided in still another embodiment of the invention as defined in the claim 7; and

Fig. 8 a scheme showing a data communication system between computers, which system employs the data terminal equipment shown in Fig. 7.

## DETAILED DESCRIPTION OF THE PREFERRED EMBODIMENTS

The preferred embodiments of the invention will now be described. Fig. 1 illustrates in outline a system in which a user computer is connected to a host computer by telephone lines used as data communication lines in order to receive an information service from the host computer.

The reference numeral 1 in Fig. 1 denotes the user computer defined as a calling computer, with the numeral 2 denoting the host computer as a called computer.

A subscriber's access line 3 belonging to a user is connected at first to the user computer 1, by means of a data circuit-terminating equipment 10. Then, the host computer 2 is called up through the subscriber's access line 3, a public communication network 4, a subscriber's line 5 belonging to the host computer, and another data circuit-terminating equipment 10 owned by the host computer. As a result, a data communication line "A" will be formed between the thus called host computer 2 and the user computer 1. This data communication line "A" is used to input from the user computer 1 an identifying message such as "ID" or pass word. A number of identifying messages are previously registered in the host computer 2 so that a decision can be made as to whether the identifying message newly received by the host computer is or is not included in the already registered identifying messages. If the newly received identifying message coincides with one of said registered identifying messages, then the user computer is regarded as one of the computers allowed to receive an information service. However, the user computer is not connected at this point of time to the host computer. If contrarily the newly received identifying message does not coincide with any registered ones, then the user computer will not be regarded as any allowed computer so that the communication line is broken.

The foregoing procedure does not differ from that which has been employed in the conventional data communication. It is however to be noted that this procedure is followed by a succeeding procedure in which an access is made from the host computer 2 to the user computer 1. This succeeding procedure for identification of the user computer will be carried out in the following manner. At the time when the user computer is judged, based on the identifying message received therefrom, to be an allowed computer, the host computer 2 calls up the user computer 1 by means of another subscriber's line 6 belonging to the host computer. In detail, the calling is done via another data circuit-terminating equipment 10, the subscriber's line 6, the public communication network 4, another subscriber's line 7 for identifying the users, and a further data circuit-terminating equipment 10. Here is formed a further data communication line "B" in addition to that "A" mentioned above, for making the access from the host computer 2 to the user computer 1. It will be understood that the users who want the computer service must previously have their telephone numbers registered in the host computer 2 for the subscriber's lines 7, in addition to their identifying messages such as "ID" and pass words. The host computer 2 will thus be able to identify, based on the identifying message sent from the user computer, any particular one of the subscriber's lines 7 by which it can call up the user computer 1 in issue.

Although there can be employed any suitable technique in order to identify the user computer 1 by using the host computer's 2 access thereto, one of the preferable manners is as follows. After the user computer 1 is called up, the access line "A" for data communication from it to the host computer 2 and the other access line "B" from it to the user computer 1 may be connected one to another. A sort of large loop circuit for data communication will thus appear when seen from the host computer 2 wherein the communication lines "B" and "A" have their ends connected at the side of user computer 1. Data signals or the like will be transmitted through such communication lines "B" and "A" so as to return to the host computer 2. If the formation of such a large loop of data communication is detected, the user computer is regarded as one of allowed computers and consequently the connection thereof with the host computer 2 is permitted. Desired information will be delivered by the host computer 2 to the user computer 1 in this way. This information delivery to the user may be done through both lines "A" and "B" or through either line. In the former case, the access line "B" from the host computer remains connected to user computer 1 so as to be utilized together with the other line "A" from the user computer 1. In the latter case, one of the access lines is broken after the identification of the user computer has been made. It will be preferred to utilize both the lines "A" and "B" so that the communication capacity may be increased double.

If however the formation of the large loop circuit of data information is not detected, then the host computer 2 decides that the user computer 1 is not any one of the allowed computers. Communication with the user computer 1 is broken in this case to disable the connection therewith.

Technical means to form the loop circuit by mutually connecting the two communication lines "A" and "B" at the side of user computer 1, as well as technical means to detect such a loop circuit, may either be any hardware devices, any software programs, or both of them. Although in the embodiment described above the single line "B" for data communication is utilized to identify the user computer by means of the access from the host computer 2, two or more communication lines may be employed to further decrease the likelihood of unfair procuration of the information service. Although the inputting of the identifying messages from the user computer 1 precedes the the access made from the host computer 2 for the identification of the user computer 1 in issue, the latter step may precede the former step. The identifying messages may be made more sophisticated or may be highly cryptogrammatically coded to preclude the unfairness. Further, the invention can be applied not only the data communication between the user computer 1 and host computer 2 from which it receives the information service, but also to the computer communication in general using the terminals compatible with each other.

The location of the calling computers 1, or the calling computers 1 themselves, are inevitably fixed in such a mode of data communication as proposed above, because each called computer 2 must make the access to the calling computer 1 when called by it. For example, handy computers which are not fixed in their location but are mobile anywhere cannot use the public communication lines to make a contact with the called computer 2 for the information service. This means that the already proposed mode will be somewhat unsatisfactory in ensuring the easiness and readiness of the data communication.

Fig. 2 illustrates another mode which is designed to resolve such a problem. In this alternative mode, any local user's computer such as the handy computer can be connected by the calling computer to the host computer if and when the information service is wanted.

In Fig. 2, the reference numeral 1 denotes the user computer, and the numeral 2 denotes the host computer, with the numeral 3 denoting the subscriber's line belonging to the user for the purpose of access to the information service system. Further, the numerals 4 to 10 also denote components which are the same as or similar to those shown in Fig. 1, wherein numeral 4 denotes the public communication network, numeral 5 denotes the further subscriber's line belonging to the host computer, numeral 6 denotes another line which belongs to the host computer 2 for making an access to the user computer, numeral 7 denotes another subscriber's line for identifying the user, and numeral 10 denotes the data circuit-terminating equipments. The system shown in Fig. 2 characteristically comprises the local user's computer 8 which may be connected to the host computer 2 in the following manner.

At first, the local user's computer 8 will be connected to the user computer 1 by means of a public communication line 9. This connection may be realized by inputting an identifying message such as a pass word which will be previously agreed between the local user's computer 8 and user computer 1. In order to preclude unfair connection therebetween, the identifying message may be of such a nature as can be used only once or as altering successively in accordance with a previously agreed rule. If the identifying message is not judged to be correct, then the communication line between the local user's computer 8 and the user computer 1 will be broken. It will be understood that any proper data terminal or data circuit-terminating equipment need be interposed between the local user's computer 8 and public communication line 9, and also between this line 9 and the user computer 1, though they are not shown in Fig. 2.

Subsequently, the subscriber's access line 3 belonging to the user is connected to the user computer 1 so that a contact thereof with the host computer 2 is made through this subscriber's line 3, the public communication line 4 and the subscriber's line 5 belonging to the host computer 2. A data communication line "A" is formed between the user computer 1 and the host computer 2 which is thus called up by the user computer. The identifying message such as "ID" or pass word will be input into the host computer 2 which is to be called on the line "A". The inputting of the identifying message may directly be executed by operating the local user's computer 8, with the user computer 1 intervening between it and the host computer. Alternatively, the identifying message may previously be registered in the user computer 1 so that it automatically input the message to the host computer, after linkage between local user's computer and the user computer has been established. In any event, such identifying messages are previously registered in the host computer 2 so that it checks the newly received identifying message and decides whether it coincides with any of the registered ones or not. If the newly received one is an already registered one, then the user computer 1 is judged to be one of the allowed or authorized computers, though it is not connected to the host computer at this point of time. If the received identifying message does not correspond to any of the registered ones, then the user is judged to be unfair or unauthorized, with the communication line being broken successively.

Next, the access is made from the host computer 2 to the user computer 1 in order to determine whether it is one of the allowed computers or not. The procedure therefor is the same as that shown in Fig. 1, and description thereof is not repeated here.

Upon affirmative identification of the user computer 1 as a result of the access thereto from the host computer 2, the user computer 1 is linked thereto and allowed to receive the information service from the host computer. This information is simultaneously transmitted from the user computer 1 to the local user's computer 8 in order that the user can procure the data or information. The access line "B" from the host computer 2 may be kept connected and used together with the conventional line "A" from the user computer 1 while the data or information is delivered to the allowed user. Though only one of the access lines may be used for this purpose, use of both the lines "A" and "B" is preferable for doubling the transmission capacity or speed.

In order to perform the modes of data communication method illustrated in Figs. 1 and 2, it is necessary as shown therein to dispose the data terminal or data circuit-terminating equipments respectively between the user computer 1 and the subscriber's line belonging thereto, and between the host computer 2 and its subscriber's line. Such data terminal or data circuit-terminating equipments need be connected to the respective communication lines "A" and "B" shown in Figs. 1 and 2. The conventional type of data circuit-terminating equipments already known in the art may be deemed employable without any problem. It is however to be noted that each prior art equipment comprises only one input-output device for connection to computer and only one input-output device for connection to public communication line. Therefore, two prior art data circuit-terminating equipments 10 are needed to connect the computers 1 and 2 to the communication line "A", with two more such equipments 10 being also needed to connect said computers to the other communication line "B". Thus, four prior art equipments 10 must be used as a whole in the system shown in Fig. 1 or 2 for each user computer. Furthermore, connection must be made between each computer and each of said equipments 10. A number of hardware devices such as interface devices or circuits will be incorporated in the system, wherein the number of said devices will inevitably be increased corresponding to the increased number of additional communication lines. Consequently, the increased number of the prior art data circuit-terminating equipments will lower the processing capacity of the computer and will result in a higher manufacture cost of the system.

In view of the foregoing problem, the present invention provides a data terminal equipment which can be successfully employed to perform the data communication method of the invention, without increasing at all the number of circuits installed in the computer for connection to the data circuit-terminating equipments.

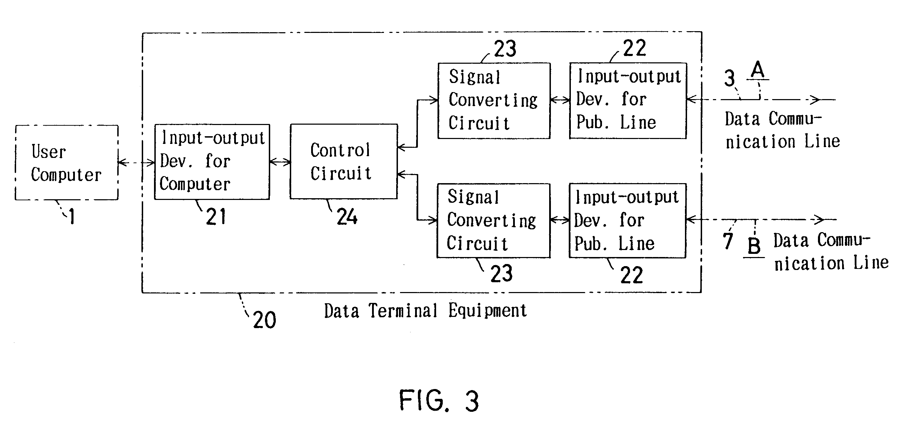

A block diagram of a first embodiment of the data terminal equipment of the invention is given in Fig. 3, wherein the data terminal equipment 20 comprises an input-output device 21 for connection to computer, two input-output devices 22 and 22 for connection to public communication lines, two signal converting circuits 23 and 23, and a control circuit 24.

The input-output device 21 for connection to computer is connected to the user computer 1 or to the host computer 2, directly or indirectly. Fig. 3 shows an example in which the input-output device 21 is connected to the user computer 1. This connection may be made by means of a serial interface such as RS232C or a parallel interface, in a manner similar to the prior art data circuit-terminating equipments.

The input-output devices 22 and 22 for connection to public communication lines are connected respectively to two independent public communication lines. In the illustrated example, each device 22 is connected to one line so that two such lines are connected to this equipment. It is of course possible to incorporate three or more input-output devices for connection to three or more public communication lines, if necessary.

Each of the signal converting circuits 23 and 23 is adapted to convert into predetermined forms the bidirectional data signals which are transmitted between the computer 1 or 2 and the public communication line. In an example of the circuit 23 used with the analog transmission lines, it comprises a modulator-demodulator (MODEM) such that a series of data signals received by the circuit from the computer are modulated therein so as to be output to the public communication line. The data signals which are received by the modulator-demodulator from the public line are demodulated and output to the computer 1 or 2.

The control circuit 24 controls the connection and disconnection of the computer 1 or 2 to all or any of the public communication lines so that the data signals may be transmitted therebetween. Such a function of this circuit is controlled by the command signals from the computer. In a state of the computers 1 and 2 mutually connected by the communication line "A", bidirectional data communication is possible between the computers through the line "A". In another state of the computers 1 and 2 mutually connected by the communication line "B", bidirectional data communication is possible between the computers through the line "B". In still another state of the computers 1 and 2 mutually connected by both the communication lines "A" and "B", bidirectional data communication is possible between the computers through any of or both the lines "A" and "B".

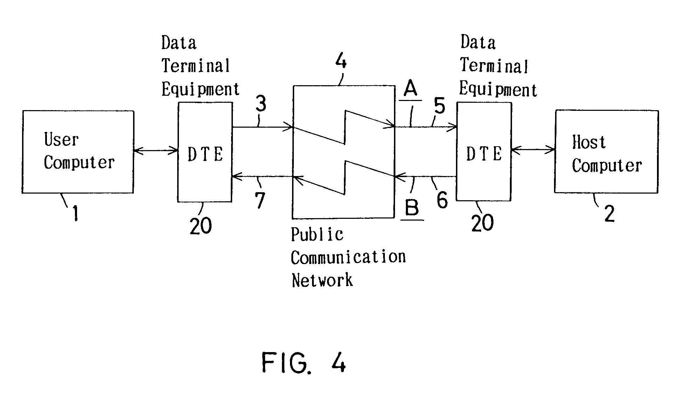

Fig. 4 shows a system which is composed of the data terminal equipments 20 shown in Fig. 3 and two telephone lines as the public communication lines so that the mode of data communication shown in Fig. 1 can be performed favorably. The data terminal equipment 20 belonging to the user is connected to the user computer 1 and to two subscriber's lines 3 and 7 owned by the user for access to the information service. The other terminal equipment 20 belonging to the host computer is connected to the host computer 2 and also to two other subscriber's lines 5 and 6 belonging to the host computer. The user computer 1 calls the host computer 2 through the subscriber's access line 3, the public communication line 4 and the subscriber's line 5 belonging to the host computer. When the user computer calls up the host computer in this manner, the control circuit 24 in the user's data terminal equipment 20 receives the command from the user computer 1 so as to keep it connected to the subscriber's line 3. One of the data communication lines "A" will thus be formed between the user computer 1 and the called host computer 2. The identifying message such as "ID" or pass word will then be input at the user computer 1 through this communication line "A" toward the host computer. The host computer 2 checks the identifying message and decides whether the user computer is or is not one of the allowed computers. If no at this decision, then the communication line is broken.

If contrarily the identifying message from the user computer 1 proves its authorized status, the host computer 2 calls up the user computer 1 by means of its subscriber's line 6 and the other subscriber's line 7 which is used to identify the user. When the user computer is called up in this way, the control circuit 24 in the user's data terminal equipment 20 receives the command from the user computer 1 so as to keep it connected to the subscriber's line 7, with the other subscriber's line 3 being kept at its wait status. Thus, the other data communication line "B" distinct from the conventional line "A" is formed for making the access to the user computer 1 from the host computer 1.

If the access from the host computer 2 proves the authorized status of the user computer 1, then it will be connected to the host computer 2. If said access from the host computer does not so prove, then it breaks the communication with the user computer 1 and prevents it from connecting to the host computer 2.

It will now be apparent that the data terminal equipment 20 can control the two data communication lines "A" and "B" though it is connected to the user computer 1 by only one interface.

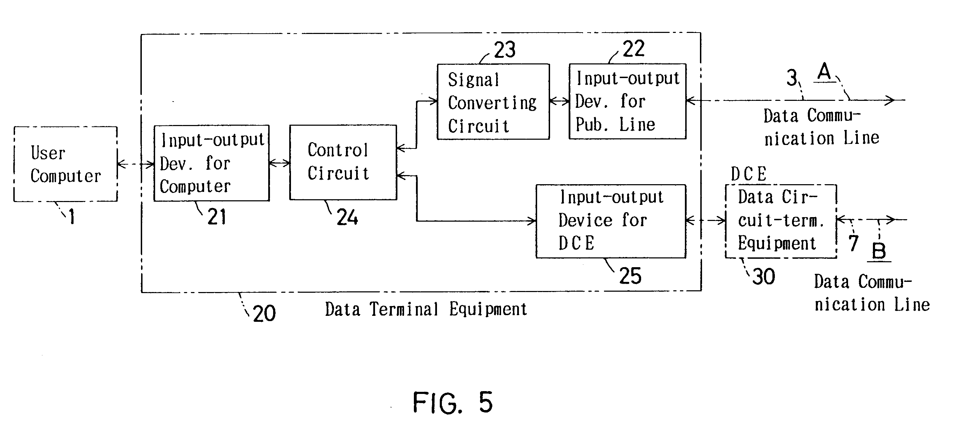

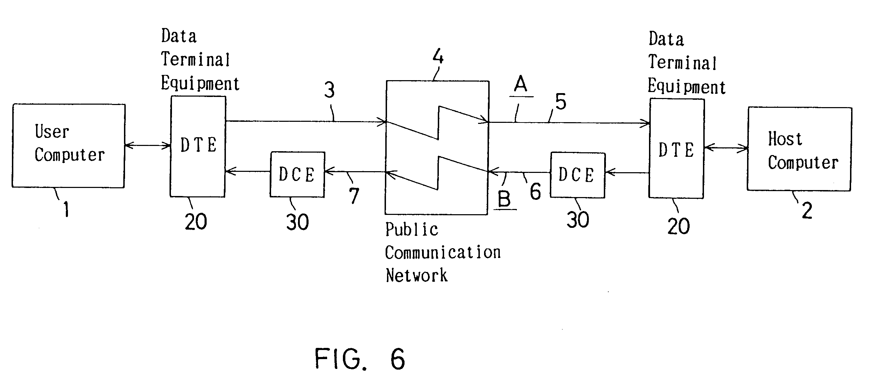

Fig. 5 illustrates a second embodiment of the data terminal equipment, and Fig. 6 shows in outline the connection between the user and host computers 1 and 2 wherein the data terminal equipments shown in Fig. 5 are employed. This equipment comprises at least one further input-output device 25 which is connected to a conventional data circuit-terminating equipment 30, in addition to at least one input-output device 22 which is connected to the public communication line. The computers 1 and 2 give commands to the control circuits 24 so that data signal transmission is controlled between the computer and the public communication line, and/or between the computer and the data circuit-terminating equipment 30.

This embodiment also employs only one interface to connect the computer 1 to the data terminal equipment 20 in such a manner that the public communication line is controlled through this interface.

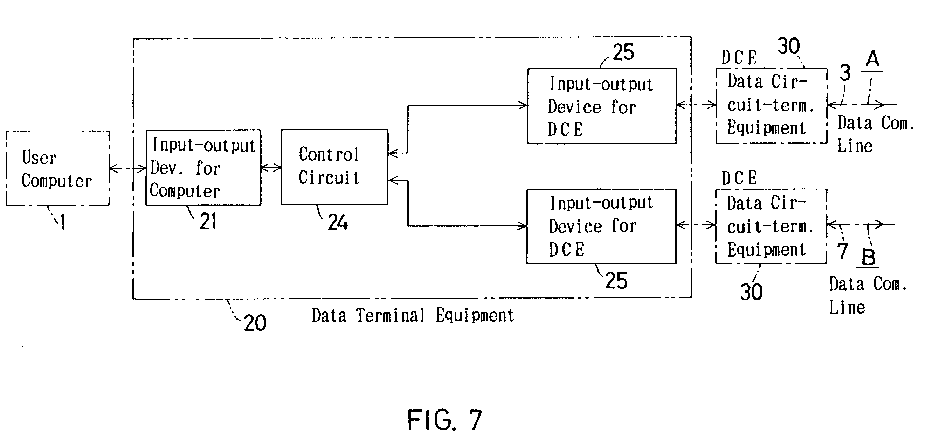

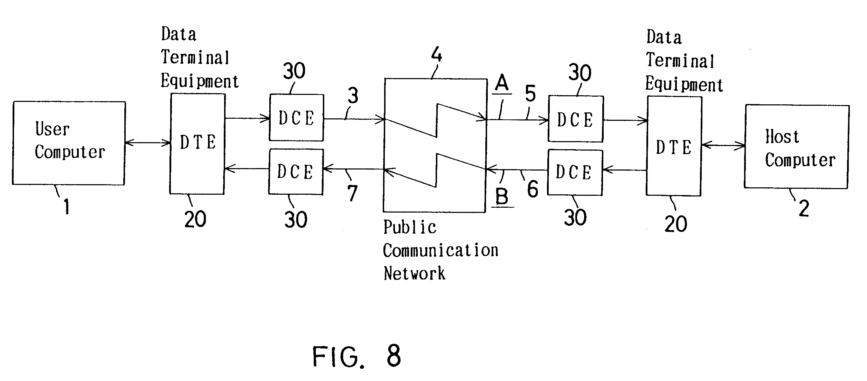

Fig. 7 illustrates a third embodiment of the data terminal equipment, and Fig. 8 shows in outline the connection between the user and host computers 1 and 2 wherein the data terminal equipments shown in Fig. 7 are employed. This equipment comprises at least two input-output device 25 and 25 which are connected to the conventional data circuit-terminating equipments 30 and 30. The computers 1 and 2 give commands to the control circuits 24 so that data signal transmission is controlled between the computer and all or any of the data circuit-terminating equipments 30.

This embodiment also employs only one interface to connect the computer 1 to the data terminal equipment 20 in such a manner that the public communication line is controlled through this interface.

The same numerals are given to the elements in Figs. 5 to 8 which are the same as those included in Figs. 3 and 4, and description thereof is not repeated.

In summary, the mode of the invention defined in the accompanying claim 1 is composed of the steps of: inputting an identifying message such as a pass word through a data communication line from a calling computer to a called computer so that the conventional identification of the calling computer is made; making an access through another data communication line from the called computer to the calling computer so that the calling computer is identified again in addition to the conventional identification; and connecting the calling and called computers one to another only in a case wherein both the preceding steps identify the calling computer as one of allowed computers. Therefore, any user who has unfairly procured the identifying message will never be allowed to connect his computer to the called computer, unless the access from the called computer proves his qualification, even if he might be falsely identified as an owner of such an allowed computer by using such an unfairly procured identifying message. Thus, the possibility that the information service is unfairly obtained or the computer programs and/or data are intentionally destroyed or falsified will be remarkably lowered. Further, any access itself to the called computer by using only the identifying message can be deemed to be an evidence of the presence of unfair user. In such a case, the authorized owner of calling computer and the owner of called computer can promptly consult one another to adopt a new identifying message, whereby unfair connection to the called computer will be prevented more surely.

The other mode of the invention defined in the accompanying claim 3 is characterized in that a local user's computer is connected to the calling computer while the calling and called computers make accesses to each other to identify the calling computer. Thus, the local user's computer calls up the called computer via the calling computer. Strict and precise control of the local user's computers and usage thereof will be effective to protect the information service from being unfairly obtained and also to prevent the programs and data from being intentionally destroyed or falsified, without any fear of impairing the easiness and benefit of the data communication. It is also to be noted that the calling computer functions as a relay station between any local user's computer and the called computer. Therefore, many and unspecified local user's computers can be controlled more easily than in a case wherein they are directly connected to the called computer, whereby a simpler and safer system is established for data communication.

The data terminal equipment of the invention as defined in the accompanying claims 5 to 7 is characterized in that each computer which is connected to one input-output device can readily control the connection and disconnection of the public communication lines independent of each other, either directly or indirectly by using the adjacent data circuit-terminating equipment. This feature is advantageous in that any existing computer having only one interface for connection to the data terminal or data circuit-terminating equipment can be used even where the identification of the using computer is carried out by means of two or more public communication lines in such a mode of data communication as defined in the claim 1 or 3. Consequently, there arises no necessity of installing any additional computer interfaces to meet the increase of the employed communication lines. This is a significant advantage because such additional interfaces would otherwise cause a lowered capacity of computer and an increased cost of data communication.

## Claims

1. A method of data communication, the method comprising the steps of: inputting an identifying message through a data communication line from a calling computer to a called computer so as to identify the calling computer; making an access through another data communication line from the called computer to the calling computer so as to identify again the calling computer; and connecting the calling and called computers one to another only in a case wherein both the preceding steps identify the calling computer as one of allowed computers.

2. The method as defined in claim 1, wherein the access from the called computer to the calling computer is made by means of a telephone number data.

3. A method of data communication, the method comprising the steps of: inputting an identifying message through a data communication line from the calling computer to a called computer so as to identify the calling computer, after the calling computer has been called up by a local user's computer; making an access through another data communication line from the called computer to the calling computer so as to identify again the calling computer; and connecting the local user's computer to the called computer only in a case wherein both the preceding steps identify the calling computer as one of allowed computers.

4. The method as defined in claim 3, wherein the access from the called computer to the calling computer is made by means of a telephone number data.

5. A data terminal equipment which intervenes between a computer used for data communication and two or more public communication lines, the equipment comprising:

an input-output device for connection to a computer;

a plurality of further input-output devices for connection to respective public communication lines independent of each other;

a plurality of signal converting circuits for conversion of data signals bidirectionally transmitted between the computer and the public communication lines; and

a control circuit for causing the data signals to be transmitted between the computer and all or any of the public communication lines, in response to command signals from the computer.

6. A data terminal equipment which intervenes between a computer used for data communication and two or more public communication lines, the equipment comprising:

an input-output device for connection to a computer;

at least one further input-output devices for connection to at least one public communication lines;

at least one signal converting circuits for conversion of data signals bidirectionally transmitted between the computer and the public communication lines;

at least one still further input-output devices for connection to data circuit-terminating equipments; and

a control circuit for causing the data signals to be transmitted between the computer and the public communication lines, and/or between the computer and the data circuit-terminating equipments, in response to command signals from the computer.

7. A data terminal equipment which intervenes between a computer used for data communication and two or more public communication lines, the equipment comprising:

an input-output device for connection to a computer;

a plurality of further input-output devices for connection to respective data circuit-terminating equipments; and

a control circuit for causing data signals to be transmitted between the computer and all or any of the public communication lines, in response to command signals from the computer.

FIG. 1

FIG. 2

| Signal Converting Circuit 23 | Input-output Dev. for Pub. Line 22 |
|---|---|

3 A
Data Communication Line

| User Computer 1 | Input-output Dev. for Computer 21 | Control Circuit 24 |
|---|---|---|

| Signal Converting Circuit 23 | Input-output Dev. for Pub. Line 22 |
|---|---|

7 B Data Communication Line

20 Data Terminal Equipment

FIG. 3

User Computer 1

Data Terminal Equipment — DTE 20

3

7

Public Communication Network 4

A 5

B 6

Data Terminal Equipment — DTE 20

Host Computer 2

FIG. 4

FIG. 5

EP 0 511 732 A2

FIG. 6

EP 0 511 732 A2

FIG. 7

Data
Terminal
Equipment

Data
Terminal
Equipment

| User Computer | DTE | DCE | Public Communication Network | DCE | DTE | Host Computer |
|---|---|---|---|---|---|---|

30

4

A 5 30

3

DCE

DCE

7

B 6

Public
Communication
Network

1   20   30        30   20   2

FIG. 8